## Europäisches Patentamt
## European Patent Office
## Office européen des brevets

(19)

(11) Publication number: **0 223 278**
B1

(12)

# EUROPEAN PATENT SPECIFICATION

(45) Date of publication of the patent specification:
11.04.90

(51) Int. Cl.⁴: **B29C 37/00,** B29C 41/36, B29C 41/08, B05B 15/04

(21) Application number: 86201814.0

(22) Date of filing: 20.10.86

(54) **Process for the preparation of a moulded article from thermosetting material and a coating and a device for this purpose.**

(30) Priority: 24.10.85 NL 8502909

(43) Date of publication of application:
27.05.87 Bulletin 87/22

(45) Publication of the grant of the patent:
11.04.90 Bulletin 90/15

(84) Designated Contracting States:
AT BE CH DE ES FR GB IT LI NL SE

(56) References cited:
EP-A- 0 116 843
WO-A-83/03220
GB-A- 1 126 343
US-A- 3 841 261

(73) Proprietor: DSM RESINS BV, Ceintuurbaan 5,
NL-8022 AW Zwolle(NL)

(72) Inventor: Dorrestijn, Antoon, Berkenstraat 3,
NL-6127 CK Born(NL)
Inventor: Verwer, Andreas Nicolaas Jacobus,
Ecrivissestraat 61, NL-6191 CJ Beek(NL)

(74) Representative: Hoogstraten, Willem Cornelis Roeland
et al, OCTROOIBUREAU DSM Postbus 9, NL-6160 MA
Geleen(NL)

ACTORUM AG

## Description

The invention relates to a process for the preparation of a moulded article comprising thermosetting material with a coating by applying particles comprising thermosetting material as coating material onto a heated mould which mould is partly covered with a mask, removing the mask from the mould, applying a moulding compound into the mould, closing the mould and applying pressure in order to cure the compound and coating further.

The invention also relates to a mask suitable for the said process.

Such an in-mould coating is used to provide thermosetting materials, particularly polyester moulded articles, with a strong surface of a fine appearance. Onto a heated mould first a layer of noncured particles is applied. The particles can be solid or liquid. Powder will flow because of the heat of the mould. The resulting layer will be set to form such a hard layer that this layer can cope with the shear forces that occur in the application of a compound, such as a sheet moulding compound, bulk moulding compound or dough moulding compound. These compounds are known in the art and comprise generally one or more thermosetting resins like unsaturated polyester, melamineformaldehyde, fenolformaldehyde, and further fillers like glass fibres and calciumcarbonate.

The particle-shaped coating material is generally applied by spraying with a robot, notably electrostatic spraying. Not the whole mould is coated (notably the edges are not), and that is why usually a plywood sheet is laid on the part that must not be provided with a coating. The process described here cannot be used if the coating material is to be applied fully automatically, notably because the mask will be contaminated in course of time.

In EP-A-116843 a solution for this problem is described: The mould is covered with a mask consisting of a thin shield that does not touch the mould. Through the resulting slot, air can be blown. However, this solution is only partly satisfactory. In course of time the shield will heat up, so that powder will stick to and cure on the shield and that liquid and/or melted powder will cure on the shield. It has further been found that owing to the relatively wide slot (0.5-1.2 mm) the line of demarcation on the edges of the coating is not very sharp.

Now this is avoided in that the process for the preparation of a moulded article comprising thermosetting material with a coating by applying particles comprising thermosetting material as coating material onto a heated mould which mould is partly covered with a mask, removing the mask from the mould, applying a moulding compound into the mould, closing the mould and applying pressure in order to cure the compound and coating further, is characterized in that the mask substantially consists of heat-conducting material which is cooled by a cooling agent.

In NL-A 6913073 a device is described, showing a cooled mask that is applied by the working up powders that may melt. However, the device can be used only for working up thermoplastic powders, because the mask is unremovable connected with the mould. Therefore moulding compounds that have to be cured under pressure can not be applied. This means, that a moulded article from thermosetting material cannot be prepared with a device according NL-A 6513073.

Preferably, at the line of demarcation between the portions of the mould to be coated and to be covered the mask according to the invention does not quite touch the mould, but leaves a slot of between 0.001 and 1 mm, preferably 0.01-0.4 mm, particularly about 0.1 mm.

In a special embodiment a gas flow can be maintained through this slot from the mask to the mould cavity, but this is not necessary. Through the thin slot hardly any coating material can penetrate, due in part also to the Faraday effect (the mould and the mask are both earthed).

The mask suitable for this process is characterized in that it consists of heat-conducting material and is provided with a cooling ring which is not in open communication with the mould.

By using this mask in the process described above the contamination of the mask is avoided now so that the mask can be used for a long time. This is achieved notably by so cooling the mask that the coating there does not melt or cure. The most sensitive point in this respect is the line of demarcation between the mask and the mould. It will then be found to be an advantage for the mask not to touch the mould, but to leave a slot. From the examples, however, it will be found that this is not necessary. If the mask is cooled sufficiently, the temperature of the mask at the line of demarcation will also be lower than the melt temperature of the powder.

The heat-conducting material is preferably metal, particularly aluminium, because it is light and a good conductor. Steel, however, is cheaper and in many cases suitable, too.

The cooling agent is preferably water, because it is cheap with a good transfer of heat. However, freon for instance is also a very suitable cooling gas if otherwise the mask is too heavy.

A metal mask can be designed very accurately, which enhances the process operation and the accuracy of the process. This can be even further improved upon by providing the mask with guide pins or openings, complementary to those of the mould member. This normally defines the position of the mask in respect of the mould to 0.1 mm. Now, if the chosen space between the mask and the mould is smaller than 0.3 mm, the coating, too, can be applied with equal accuracy. This is important particularly in injection moulding processes.

In order to work under entirely clean conditions it is also an advantage to incorporate the mask in a booth provided with an exhaust and an opening for the spray arm of a robot. It is possible also to use one or more spray guns mounted permanently in a booth. The booth can then be kept closed virtually completely.

If a gas stream is applied from the mask to the cavity of the mould, preference is given, for practical reasons, to the use of air.

The electrostatically charged particles will fall also on the earthed metal mask and be stuck. As they will neither melt - in case of powder - nor cure - in case of solid or liquid -, they can be easily dusted or sucked from the mask, if so desired, or the mask can be cleaned otherwise.

The particles that must form the coating are sprayed liquid or in the form of a powder. By preference a powder is applied. The powder, particularly suitable for polyester moulded articles, contains, for instance, polyester, prepolymer of diallyl phthalate, triallyl isocyanurate, a catalyst, inhibitors and colourants, but the application is not limited hereto.

The whole will be elucidated in the following modes of realizing the process without being limited thereto.

Example I

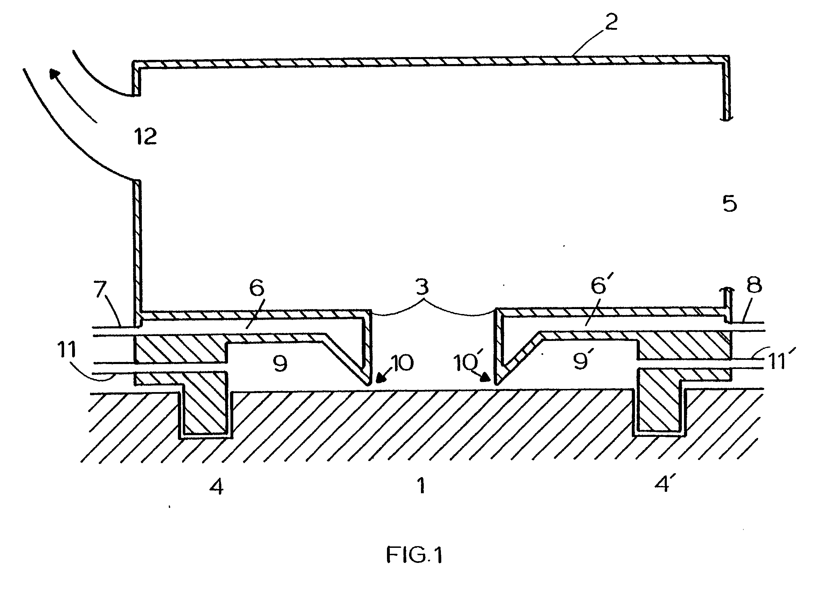

In a simple and diagrammatic example (Figure 1) a heated mould 1 is provided with a booth 2 with a covering mask 3 on one side. The covering mask 3 is provided with guide pins 4 and 4'. Onto the exposed portion of the mould, so drawn in this figure as to be very small, powder coating can be sprayed by means of a spray gun on the arm of a robot through opening 5 in booth 2, upon which, in consequence of the heat, the powder will flow and cure to form a coating. The covering mask 3 is cooled by a cooling agent which is circulated through space 6 and 6' by means of a pump via inlet and outlet 7 and 8. If so desired, an air stream can be maintained from cavity 9 and 9' through slot 10 and 10' between mask 3 and mould 1. The air is supplied then through lines 11 and 11'. In the cavities provisions may have been made for the air stream to be passed evenly into the mould. Particles which fall on mask 3 can be sucked off through line 12. Thus contamination of the equipment and of the working environment is eliminated. After the application of the coating the whole booth 2 can be removed, optionally using a robot again, upon which for instance a SMC (sheet moulding compound) can be put in the mould and the whole can be moulded and cured. The powder left on the mask, without being melted or cured, is removed from the mask during the moulding of the compound by, for instance, suction or brushing.

Example II

The following measurements showed that after some time the mask would still be so cold as not to cause the coating to melt or to cure.

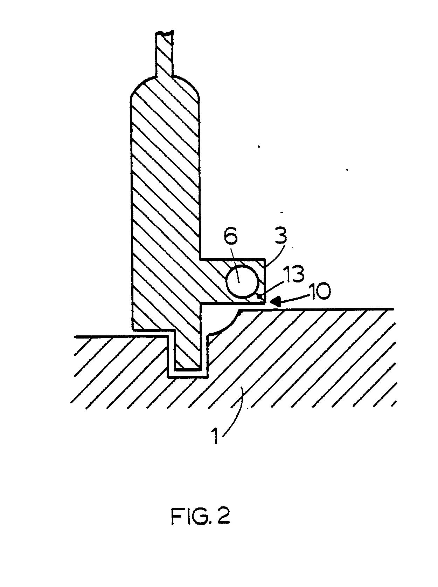

A mask according to figure 2 was cooled with water of 12°C and placed on or over a mould having a temperature of 150°C. No air current was applied. After half an hour the temperature was measured with thermocouple 13. The results are shown in table 1.

TABLE 1

| Slot | Temperature |
|---|---|
| 0.0 mm | 30¤C |
| 0.1 mm | 15¤C |
| 0.2 mm | 12.5¤C |
| 0.4 mm | 12¤C |
| 1.0 mm | 12¤ |

As the coating powder softens at about 40°C, the temperature of 30°C (with a 'slot' of 0.0 mm) is still low enough to prevent melting.

Example III

A rectangular convering mask as used in example II was applied in a booth as in example I. Slot 10 was 0.01 and 0.1 mm wide and no compressed air was applied. After thirty cycles it was found that no powder had melted or cured on the mask. However, it was found to be an advantage for the mask to be vacuum-cleaned with a small vacuum cleaner at an appropriate place during the moulding of the compound. If this was not done, powder would fall on the mould when the booth was placed on the mould, in consequence of which a local unevenness of the coating would be formed.

Comparative experiment A

A shield of aluminium, wood or teflon was used as covering mask. A slot of 1 mm and an air current were applied. Already at once coating was found to melt on the shield. On wood and teflon the adhesion of the powder coating was found to be slightly less, but a mask of these materials cannot be made with great accuracy.

Comparative experiment B

A shield of wood was used as covering mask in a booth as described in example I while applying an air current with a slot of 1 mm. During the moulding of the compound the shield was always vacuum-cleaned with a small vacuum cleaner. After 30 cycles it was found that there was a coating of about 1 mm on the shield.

Claims

1. Process for the preparation of a moulded article comprising thermosetting material with a coating by applying particles comprising thermosetting material as coating material onto a heated mould which mould is partly covered with a mask, removing the mask from the mould, applying a moulding compound into the mould, closing the mould and applying pressure in order to cure the compound and coating further, characterized in that the mask substantially consists of heat-conducting material which is cooled by a cooling agent.

2. Process according to claim 1, characterized in that at the line of demarcation between the mould portions to be coated and to be covered the mask does not touch the mould, but forms a slot having a width of 0.001–1 mm.

3. Process according to any one of claims 1–2, characterized in that the heat-conducting material is metal.

4. Process according to any one of claims 1–3, characterized in that the heat-conducting material is aluminium or steel.

5. Process according to any one of claims 1–4, characterized in that the cooling agent is water.

6. Process according to any one of claims 2–5, characterized in that a gas flow is maintained through the slot wherein the gas is air.

7. Mask suitable for the process according to any one of claims 1–5, characterized in that it consists of heat-conducting material and is provided with a cooling ring which is not in open communication with the mould and a space through which a gas stream can be maintained between the mask and the mould.

8. Mask according to claim 7, characterized in that the heat-conducting material is aluminium.

9. Mask according to any one of claims 7–8, characterized in that it is provided with guide pins or cavities complimentary to the mould portion.

10. Booth, characterized in that it is provided with a mask according to any one of claims 7–9, an exhaust and an opening for the arm of a robot.

## Patentansprüche

1. Verfahren zum Herstellen eines mit einer Bekleidung versehenen geformten Gegenstandes, welcher ein duroplastisches Material enthält, wobei duroplastisches Material enthaltende Teilchen als Bekleidungsmaterial auf eine aufgeheizte Form aufgebracht werden, welche Form teilweise mit einer Maske abgedeckt wird, die Maske von der Form entfernt wird, eine Formmasse in die Form eingebracht wird, die Form geschlossen wird und Druck angewendet wird, um die Maske und weiter auch die Bekleidung auszuhärten, dadurch gekennzeichnet, daß die Masse im wesentlichen aus einem wärmeleitenden Material besteht, welches durch ein Kühlmittel gekühlt wird.

2. Verfahren nach Anspruch 1, dadurch gekennzeichnet, daß an der Grenzlinie zwischen den zu beschichtenden Formteilen und den abzudeckenden Formteilen die Maske die Form nicht berührt, sondern einen Schlitz bildet, der eine Breite von 0,001 bis 1 mm hat.

3. Verfahren nach Anspruch 1 oder 2, dadurch gekennzeichnet, daß das wärmeleitende Material ein Metall ist.

4. Verfahren nach einem der Ansprüche 1 bis 3, dadurch gekennzeichnet, daß das wärmeleitende Material Aluminium oder Stahl ist.

5. Verfahren nach einem der Ansprüche 1 bis 4, dadurch gekennzeichnet, daß das Kühlmittel Wasser ist.

6. Verfahren nach einem der Ansprüche 2 bis 5, dadurch gekennzeichnet, daß ein Gasfluß durch den Schlitz aufrechterhalten wird, wobei das Gas Luft ist.

7. Maske für das Verfahren nach einem der Ansprüche 1 bis 5, dadurch gekennzeichnet, daß die Maske aus einem wärmeleitenden Material besteht und mit einem Kühlring versehen ist, der nicht in offener Verbindung mit der Form steht, und mit einem Raum, durch welchen ein Gasstrom zwischen der Maske und der Form aufrechterhalten werden kann.

8. Maske nach Anspruch 7, dadurch gekennzeichnet, daß das wärmeleitende Material Aluminium ist.

9. Maske nach Anspruch 7 oder 8, dadurch gekennzeichnet, daß die Maske mit Führungsstiften oder Ausnehmungen, welche zum Abschnitt der Form komplementär sind, versehen ist.

10. Zelle, dadurch gekennzeichnet, daß sie mit einer Maske nach einem der Ansprüche 7 bis 9, einem Abzug und einer Öffnung für den Arm einer Robotervorrichtung versehen ist.

## Revendications

1. Procédé de préparation d'un article moulé comprenant une matière thermodurcissable avec un revêtement, qui consiste à appliquer des particules comprenant la matière thermodurcissable en qualité de matière de revêtement sur un moule chauffé partiellement recouvert d'un cache, à enlever le cache du moule, à appliquer un composé de moulage dans le moule, à fermer le moule et à appliquer une pression pour faire durcir le composé et le revêtement encore plus, caractérisé en ce que le cache est sensiblement formé en un matériau conducteur de chaleur qu'on refroidit à l'aide d'un agent de refroidissement.

2. Procédé selon la revendication 1, caractérisé en ce qu'à la ligne de démarcation entre les portions du moule à revêtir et à recouvrir le cache ne touche pas le moule, mais définit une fente ayant une largeur de 0,001 à 1 mm.

3. Procédé selon la revendication 1 ou 2, caractérisé en ce que le matériau conducteur de chaleur est un métal.

4. Procédé selon l'une quelconque des revendications 1 à 3, caractérisé en ce que le matériau conducteur de chaleur est l'aluminium ou l'acier.

5. Procédé selon l'une quelconque des revendications 1 à 4, caractérisé en ce que l'agent de refroidissement est l'eau.

6. Procédé selon l'une quelconque des revendications 2 à 5, caractérisé en ce qu'on maintient l'écoulement gazeux à travers la fente, le gaz étant l'air.

7. Cache qui convient pour un procédé selon l'une quelconque des revendications 1 à 5, caractérisé en ce qu'il comprend un matériau conducteur de chaleur et comporte une bague de refroidissement qui n'est pas en communication libre avec le moule et un espace par lequel le courant gazeux peut être maintenu entre le cache et le moule.

8. Cache selon la revendication 7, caractérisé en ce que le matériau conducteur de chaleur est l'aluminium.

9. Cache selon la revendication 7 ou 8, caractérisé en ce qu'il comporte des cavités ou des clavettes de guidage complémentaires à la portion du moule.

10. Boîtier caractérisé en ce qu'il comporte un cache selon l'une quelconque des revendications 7 à 9, un orifice d'échappement et une ouverture pour le bras d'un robot.

FIG.1

EP 0 223 278 B1

FIG. 2